# EUROPEAN PATENT APPLICATION

(11) **EP 4 797 414 A1**
(43) Date of publication of application: **26.08.2026**
(21) Application number: 25869657.4
(22) Date of filing: 18.12.2025
(51) Int. Cl.: H01M 50/342

(54) **TOP COVER ASSEMBLY, BATTERY CELL AND BATTERY PACK**

(30) Priority: 31.12.2024 CN 202423319860 U; 31.12.2024 CN 202411997437
(71) Applicant: Eve Power Co., Ltd., Jingmen, Hubei 448000 (CN); HUIZHOU EVE POWER CO., LTD, Huizhou, Guangdong 516039 (CN)
(72) Inventor: LIU, Rongwei, Jingmen, Hubei 448000 (CN); LI, Renbing, Jingmen, Hubei 448000 (CN); YAN, Bo, Jingmen, Hubei 448000 (CN); HE, Wei, Jingmen, Hubei 448000 (CN)
(74) Representative: Zhu, Puxing
(86) International application number: PCT/CN2025/143667
(87) International publication number: WO 2026/145047

(57) **Abstract**

The present application provides a top cover assembly, a single cell, and a battery pack. The top cover assembly includes a plastic member and a cover plate. The cover plate is provided with a pressure relief port. The plastic member is connected to a side of the cover plate adjacent to the electrode assembly. The plastic member includes a fracture region. The fracture region is provided adjacent to the pressure relief port. The fracture region is configured to be fractured after being subjected to an air pressure inside a cell.

## Description

This application claims priority to and the benefit of Chinese Patent Applications No. 2024233 19860.X and No. 202411997437.7 filed with the Chinese Patent Office on December 31, 2024. The disclosures of which are incorporated herein by reference in their entireties.

### TECHNICAL FIELD

The present application relates to the field of battery technologies, and in particular, to a top cover assembly, a single cell, and a battery pack.

### BACKGROUND

In the field of battery technologies, an explosion-proof valve of a battery is usually formed by stamping or welding on a top cover assembly. For the explosion-proof valve formed by stamping on the top cover assembly, stamping will destroy a surface coating layer resulting in exposed metal and reduced corrosion resistance. For the explosion-proof valve welded to the top cover assembly, welding will cause defects in the top cover assembly, reducing its safety.

### SUMMARY

However, for the explosion-proof valve stamped and formed on the top cover assembly, in order to improve the corrosion resistance, the surface of nickel plating is usually applied to the surface of the explosion-proof valve, and surface pickling is performed after nickel plating. Nickel plating will enhance a strength of scores of the explosion-proof valve, while pickling will cause the scores to corrode to a certain extent. For the explosion-proof valve welded and formed on the top cover assembly, the welding method is not applicable to all metals, and the applicability of the explosion-proof valve is relatively low.

The present application provides a top cover assembly. The top cover assembly is applied to a cell. The cell includes an electrode assembly. The top cover assembly includes a cover plate and a plastic member. The cover plate is provided with a pressure relief port. The plastic member is connected to a side of the cover plate adjacent to the electrode assembly. The plastic member includes a fracture region. The fracture region is provided adjacent to the pressure relief port. The fracture region is configured to be fractured after being subjected to an air pressure inside the cell.

The present application further provides a single cell, including the afore-described top cover assembly.

The present application further provides a battery pack, including the afore-described single cell.

### BENEFICIAL EFFECTS

In the top cover assembly provided by the present application, a fracture region is formed on the plastic member and a pressure relief port is formed on the cover plate. The fracture region and the pressure relief port cooperate to form an explosion-proof valve structure, so that the explosion-proof valve structure can be formed on the top cover assembly without stamping or welding. Furthermore, the plastic member may be formed by injection molding, so that a thickness of the fracture region can be well controlled to facilitate control of an opening force of the explosion-proof valve and ensure stability of the opening force of the explosion-proof valve.

### BRIEF DESCRIPTION OF THE DRAWINGS

FIG. 1 is a schematic three-dimensional view of a top cover assembly according to an embodiment of the present application.
FIG. 2 is a cross-sectional view of a top cover assembly according to an embodiment of the present application.
FIG. 3 is an enlarged view of part A in FIG. 2.
FIG. 4 is a first schematic view of a top cover assembly in a pressure relief state according to an embodiment of the present application.
FIG. 5 is a second schematic view of a top cover assembly in a pressure relief state according to an embodiment of the present application.

Description of reference numerals:
10, cover plate; 110, pressure relief port; 120, first plate body; 130, second plate body; 20, plastic member; 210, fracture region; 220, central axis; 230, groove; 240, first protruding portion; 250, second protruding portion; 2510, first protruding section; 2520, second protruding section; 2530, air chamber; 260, main portion; 2610, mounting channel; 270, first connecting portion; 280, second connecting portion; 2810, first snap slot; 290, bending portion; 2910, second snap slot; 30, terminal assembly; 310, snap portion; 40, casing; 50, current collector.

### DETAILED DESCRIPTION

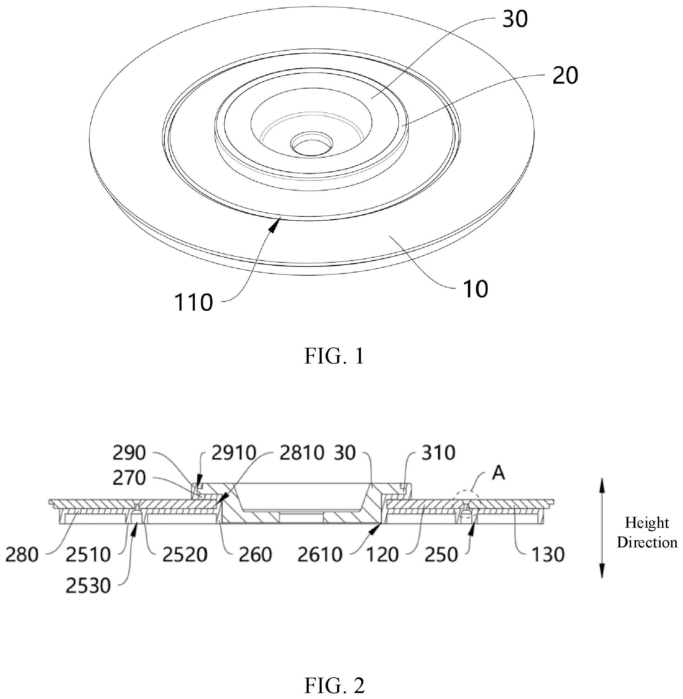

As shown in FIG. 1 to FIG. 5, embodiments of the present application provide a top cover assembly. The top cover assembly is applied to a cell. The cell includes an electrode assembly. The top cover assembly includes a plastic member 20 and a cover plate 10. The cover plate 10 is provided with a pressure relief port 110. The plastic member 20 is connected to a side of the cover plate 10 adjacent to the electrode assembly. The plastic member 20 includes a fracture region 210. The fracture region 210 is provided adjacent to the pressure relief port 1 10. The fracture region 210 is configured to be fractured after being subjected to an air pressure inside the cell.

In the embodiments of the present application, the fracture region 210 is formed on the plastic member 20 and the pressure relief port 110 is formed on the cover plate 10. The fracture region 210 and the pressure relief port 110 cooperate with each other to form an explosion-proof valve structure, so that the explosion-proof valve structure can be formed on the top cover assembly without stamping or welding. Furthermore, the plastic member 20 may be formed by injection molding, so that a thickness of the fracture region 210 can be well controlled to facilitate control an opening force of the explosion-proof valve and ensure stability of the opening force of the explosion-proof valve.

It can be understood that in a case where the electrode assembly of the cell is pierced or otherwise damaged, a large amount of gas will be generated by the electrode assembly. If the gas is continuously collected in a casing 40 of the cell, serious safety hazards will occur. In the embodiments of the present application, the fracture region 210 is formed on the plastic member 20. In a case where the air pressure inside the casing 40 reaches a certain level, the air pressure inside the casing 40 can cause the fracture region 210 to be fractured. After the fracture region 210 is fractured, the gas may be discharged from the position where the plastic member 20 is fractured and the pressure relief port 110 of the cover plate 10.

The plastic member 20 is disposed between the cover plate 10 and the electrode assembly. The plastic member 20 is made of an insulating plastic material. In this way, the insulation between the cover plate 10 and the electrode assembly can be achieved by using the plastic member 20. Furthermore, the plastic member 20 can further prevent the cover plate 10 from contacting an electrolyte, and prevent the cover plate 10 from being corroded by the electrolyte. Due to its own corrosion resistance, the plastic member 20 allows the fracture region 210 to be formed on the plastic member 20, and can further prevent the electrolyte from corroding the explosion-proof valve structure and ensure the stability of the explosion-proof valve structure.

Since the plastic member 20 may be formed by injection molding, a thickness of each position of the plastic member 20 is easily controlled. As such, an injection thickness of the fracture region 210 of the plastic member 20 can be controlled to control an opening value of the explosion-proof valve structure. An injection thickness of other regions of the plastic member 20 can also be controlled to control a tensile strength of the plastic member 20.

As shown in FIG. 2, in some embodiments, a projection of the fracture region 210 along a height direction of the cell at least covers a part of the pressure relief port 110.

It can be understood that the projection of the fracture region 210 at least covers the pressure relief port 110. In the case where the plastic member 20 is fractured at the position of the fracture region 210, the gas may overflow from the pressure relief port 110 to prevent the gas from accumulating in the casing 40 of the cell and causing the safety hazards.

In some embodiments, along the height direction of the cell, the projection of the fracture region 210 exactly covers the pressure relief port 110.

In some embodiments, along the height direction of the cell, the projection of the fracture region 210 exceeds a periphery of the pressure relief port 110. For example, the pressure relief port 110 is provided in a circular ring shape, and the fracture region 210 is also provided in a circular ring shape. An inner diameter of the fracture region 210 is smaller than an inner diameter of the pressure relief port 110. An outer diameter of the fracture region 210 is greater than an outer diameter of the pressure relief port 110.

In some embodiments, the plastic member 20 is injection molded onto the cover plate 10.

It can be understood that the cover plate 10 is a metal member, so that the plastic member 20 is injection molded on the cover plate 10 to ensure a reliable connection therebetween and facilitate manufacturing and molding of the top cover assembly. For example, before the plastic member 20 is injection molded, the cover plate 10 may also be placed in an injection mold. After the plastic member 20 is injection molded, the plastic member 20 is directly connected to the cover plate 10.

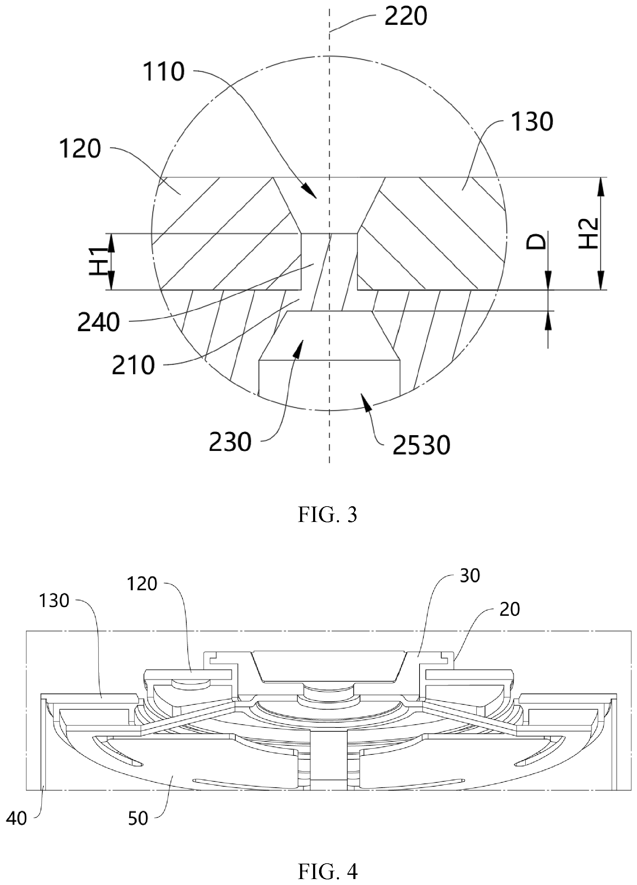

As shown in FIG. 3, in some embodiments, along a direction from an edge of the fracture region 210 to a central axis 220 of the fracture region 210, a thickness of at least a part of the fracture region 210 gradually decreases.

It can be understood that the thickness of at least a part of the fracture region 210 gradually decreases, and in a case where the thickness decreases to a position with a minimum thickness, this position may be fractured under the action of air pressure. In the embodiments of the present application, since the thickness of at least a part of the fracture region 210 gradually decreases, the thickness of the fracture region 210 is less than the thickness of other regions of the plastic member 20, thereby ensuring that the plastic member 20 can be plastic member 20 at the position of the fracture region 210 under the action of the air pressure.

As shown in FIG. 3, along the direction from the edge of the fracture region 210 to the central axis line 220 of the fracture region 210, the thickness of the fracture region 210 decreases first and then remains unchanged. The region where the thickness remains unchanged is the region with the minimum thickness of the fracture region 210. Under the action of the air pressure inside the cell, the position with the minimum thickness of the fracture region 210 will be fractured.

In some embodiments, the thickness of at least a part of the fracture region 210 may decrease linearly or exponentially.

In some embodiments, a structure such as an inclined surface and an arc surface may be formed on a side of the fracture region 210 adjacent to the cover plate 10, so that the thickness of the fracture region 210 gradually decreases. Alternatively, a structure such as an inclined surface and an arc surface may be formed on a side of the fracture region 210 adjacent to the electrode assembly, so that the thickness of the fracture region 210 gradually decreases. Alternatively, a structure such as an inclined surface and an arc surface may be formed on both sides of the fracture region 210, so that the thickness of the fracture region 210 gradually decreases.

Please continue to refer to FIG. 3, in some embodiments, the minimum thickness of the fracture region 210 is D, satisfying 0.1 mm≤D≤0.8 mm.

It can be understood that under the action of the air pressure inside the cell, the position with the minimum thickness of the fracture region 210 will be fractured. The fracture region 210 may select a value of the minimum thickness of the fracture region 210 based on the opening value of the explosion-proof valve of the top cover assembly. The value of the minimum thickness of the fracture region 210 is positively correlated with the opening value of the explosion-proof valve of the top cover assembly. Specifically, the greater the opening value of the explosion-proof valve of the top cover assembly is, the greater the value of the minimum thickness of the fracture region 210 is. The smaller the opening value of the explosion-proof valve of the top cover assembly is, the smaller the value of the minimum thickness of the fracture region 210 is.

It should be noted that in a case where the minimum thickness of the fracture region 210 is greater than 0.8 mm, a height of the fracture region 210 is too large, so that the opening value of the explosion-proof valve of the top cover assembly is too high, which fails to meet the usage requirements. Furthermore, if the minimum thickness of the fracture region 210 is greater than 0.8 mm, the first protruding portion 240 protrudes outward from the pressure relief port 110 after the first protruding portion 240 is disposed on the plastic member 20, thereby affecting an appearance of the top cover assembly. In a case where the minimum thickness of the fracture region 210 is less than 0.1 mm, the fracture region 210 cannot be formed by injection molding. As such, in the embodiments of the present application, the thickness of the region with the minimum thickness of the fracture region 210 is provided to be in a range of 0.1 mm to 0.8 mm, so as to ensure that the plastic member 20 can be formed through an injection process, ensure that the explosion-proof valve of the top cover assembly has a proper opening value, and prevent the first protruding portion 240 from passing through the pressure relief port 110.

For example, the minimum thickness of the fracture region 210 is provided to be 0.1 mm, 0.2 mm, 0.5 mm, 0.8 mm, or any value between any two thereof.

Please continue to refer to FIG. 3, in some embodiments, a side of the plastic member 20 away from the cover plate 10 is formed with a groove 230. The fracture region 210 is located at a position of the plastic member 20 corresponding to the groove 230.

It can be understood that since the side of the plastic member 20 away from the cover plate 10 is formed with the groove 230, a thickness of the plastic member 20 at the position of the groove 230 is less than a thickness of other regions of the plastic member 20. As such, under the action of the air pressure, the position of the groove 230 is more likely to be fractured, so that the position of the plastic member 20 corresponding to the groove 230 is formed with the fracture region 210.

In some embodiments, a cross section of the groove 230 may be provided to be in any shape such as a trapezoid, a semicircle, a semi-ellipse, an arc, or a polygon, so as to ensure that a radian of the plastic member 20 at the position of the groove 230 is less than the thickness of other regions of the plastic member 20.

As shown in FIG. 2 and FIG. 3, in some embodiments, the plastic member 20 is provided with a first protruding portion 240 protruding toward the cover plate 10. The first protruding portion 240 is snaped-engaged into the pressure relief port 110.

It can be understood that the first protruding portion 240 is snaped-engaged into the plastic member 20 and can fill the pressure relief port 110, thereby improving a strength of the cover plate 10. Since the first protruding portion 240 can be snaped-engaged into the pressure relief port 110, a position of the first protruding portion 240 will match the position of the fracture region 210, and the first protruding portion 240 is difficult to affect the fracture of the fracture region 210.

In some embodiments, a width of the first protruding portion 240 is less than a width of the fracture region 210, thereby ensuring that the first protruding portion 240 is difficult to increase a width at the position with a minimum width of the fracture region 210, so that the fracture region 210 can be fractured under the action of a preset air pressure.

In some embodiments, the pressure relief port 110 is provided in a circular ring shape, and the cover plate 10 may be divided into the first plate body 120 and the second plate body 130 by the pressure relief port 110. In this case, the first protruding portion 240 is also provided in a circular ring shape. The first plate body 120 may be insulated from the second plate body 130 by the first protruding portion 240.

As shown in FIG. 3, in some embodiments, a height of the first protruding portion 240 is H1, and a height of the pressure relief port 110 is H2, satisfying: H1≤H2.

It can be understood that the height of the first protruding portion 240 is less than or equal to the height of the pressure relief port 110, so as to prevent the first protruding portion 240 from passing through the pressure relief port 110 to affect aesthetics and a pressure relief effect. If the height of the first protruding portion 240 is greater than the height of the pressure relief port 110, the first protruding portion 240 will protrude from a surface of the cover plate 10. On one hand, the aesthetics of the cover plate 10 will be affected. On the other hand, after the fracture region 210 below is fractured, the first protruding portion 240 may still seal the pressure relief port 110, thereby affecting the pressure relief effect.

In some embodiments, the height of the first protruding portion 240 is less than the height of the pressure relief port 110. A portion of the pressure relief port 110 higher than the first protruding portion 240 may be provided in a gradually expanded shape.

Please continue to refer to FIG. 2, in some embodiments, the plastic member 20 is provided with a second protruding portion 250 protruding along a direction away from the cover plate 10. The second protruding portion 250 is configured to abut against the electrode assembly, or the second protruding portion 250 is configured to be spaced apart from the electrode assembly.

It can be understood that the second protruding portion 250 is disposed on the side of the plastic member 20 away from the cover plate 10, and the second protruding portion 250 abuts against the electrode assembly, so that the second protruding portion 250 can be used to support the electrode assembly to prevent the electrode assembly from arching upward due to collision. Alternatively, the second protruding portion 250 may be spaced apart from the electrode assembly, which may reduce the degree to which the electrode assembly is arched upward due to the collision.

In some embodiments, both the first protruding portion 240 and the second protruding portion 250 are integrally formed with the plastic member 20. For example, the first protruding portion 240, the second protruding portion 250, and the plastic member 20 are integrally injection molded.

Please continue to refer to FIG. 2, in some embodiments, the second protruding portion 250 includes a first protruding section 2510 and a second protruding section 2520 arranged at intervals on two opposite sides of the fracture region 210. The first protruding section 2510, the fracture region 210, and the second protruding section 2520 are enclosed to form an air chamber 2530. The air chamber 2530 is configured to accommodate the gas generated by the electrode assembly.

It can be understood that a small amount of gas may also be generated during normal charging and discharging process of the battery. Alternatively, in a case where the degree of battery damage is relatively low and less gas is generated, this part of gas may be accommodated in the air chamber 2530 to provide a space for accommodating the gas. After the air pressure is increased by increasing the amount of gas, the fracture region 210 of the plastic member 20 can be fractured to achieve pressure release.

In some embodiments, the pressure relief port 110 is provided in a circular ring shape, and the fracture region 210 is also provided in a circular ring shape, so that the first protruding section 2510 and the second protruding section 2520 are both provided in a circular ring shape. As such, the air chamber 2530 in the circular ring shape may be formed.

In some embodiments, the cover plate 10 is configured to be deformed along the pressure relief port 110 under the action of the air pressure inside the cell after the fracture region 210 is fractured.

It can be understood that after the fracture region 210 is fractured, the cover plate 10 is deformed along the pressure relief port 110 under the action of the air pressure of the cell, so that an opening size of the pressure relief port 110 can be enlarged, which is more convenient for rapid pressure relief.

It should be noted that the deformation of the cover plate 10 along the pressure relief port 110 includes: an extension region of the cover plate 10 corresponding to the pressure relief port 110 is bent along a direction away from the electrode assembly. Alternatively, the cover plate 10 is fractured along the pressure relief port 110 into two portions, and a portion of the cover plate 10 located inside the pressure relief port 110 is separated from the part of the cover plate 10 located outside the pressure relief port 110 under the action of air pressure. In this way, the cover plate 10 is at least partially detached to enlarge the opening size of the pressure relief port 110. Furthermore, in a case where the terminal assembly 30 is disposed in a region corresponding to a detached portion of the cover plate 10, the terminal assembly 30 may be detached from the top cover assembly, so as to disconnect the terminal assembly 30 from the current collector 50, thereby achieving power-off.

In some embodiments, the pressure relief port 110 is provided as an arc-shaped opening. A central angle corresponding to the arc-shaped opening is β, satisfying 180°≤β≤360°.

It can be understood that in a case where the central angle corresponding to the pressure relief port 110 is greater than or equal to 180°, the extension region of the cover plate 10 along the pressure relief port 110 can be bent along the direction away from the electrode assembly, so as to ensure that the cover plate 10 can be deformed. In the embodiments of the present application, the central angle corresponding to the arc-shaped opening may be set as 360°, so as to form the pressure relief port 110 in a circular ring shape. In a case where the cover plate 10 is subjected to the air pressure inside the cell, a region of the cover plate 10 located at an inner side of the arc-shaped opening may be pushed out and detached by the air pressure to increase the opening size of the pressure relief port 110. Furthermore, in the case where the terminal assembly 30 is disposed in the region corresponding to the detached portion of the cover plate 10, the terminal assembly 30 may be detached from the top cover assembly to disconnect the terminal assembly 30 from the current collector 50, thereby achieving power-off.

In some embodiments, the pressure relief port 110 may also be provided in other shapes. For example, the pressure relief port 110 is provided as an oval opening or a square opening, so as to ensure that the pressure relief port 110 can achieve pressure release, and the cover plate 10 can be bent or detached along the extension region of the pressure relief port 110.

As shown in FIG. 1, in some embodiments, a terminal assembly 30 is connected onto the plastic member 20. The cover plate 10 is disposed at an outer periphery of the terminal assembly 30. The pressure relief port 110 extends along a peripheral side of the terminal assembly 30. The terminal assembly 30 is configured to move away from the electrode assembly after being subjected to the air pressure inside the cell, and is separated from the current collector 50 of the cell after the fracture region 210 is fractured.

It can be understood that the terminal assembly 30 is configured to be connected to the current collector 50 to achieve external power supply. Since the cover plate 10 is disposed at the outer periphery of the terminal assembly 30, the pressure relief port 110 extends along the peripheral side of the terminal assembly 30. Under the action of the air pressure inside the cell, the cover plate 10 is deformed along the pressure relief port 110 under the action of the air pressure inside the cell. In the case where the cover plate 10 is bent along the direction away from the electrode assembly, the terminal assembly 30 may also be driven to move along the direction away from the electrode assembly, so that the terminal assembly 30 can be separated from the current collector 50 after the fracture region 210 is fractured. In the case where the cover plate 10 is detached along the direction away from the electrode assembly, the terminal assembly 30 may also be driven to move along the direction away from the electrode assembly, so that the terminal assembly 30 can be separated from the current collector 50 after the fracture region 210 is fractured.

In some embodiments, the plastic member 20 is injection molded on the terminal assembly 30 and the cover plate 10.

It can be understood that both the terminal assembly 30 and the cover plate 10 are metal members. The plastic member 20 is injection molded on the terminal assembly 30 and the cover plate 10 to ensure a reliable connection between the three components and facilitate manufacturing and molding of the top cover assembly. For example, before the plastic member 20 is injection molded, the terminal assembly 30 and the cover plate 10 may also be placed in the injection mold. After the plastic member 20 is injection molded, the plastic member 20 is directly connected to the terminal assembly 30 and the cover plate 10.

As shown in FIG. 2, in some embodiments, the cover plate 10 includes a first plate body 120 and a second plate body 130. The first plate body 120 is disposed around the outer periphery of the terminal assembly 30. The first plate body 120 is connected to the plastic member 20. The second plate body 130 is disposed around an outer periphery of the first plate body 120. The second plate body 130 is spaced apart from the first plate body 120 to form the pressure relief port 110. The second plate body 130 is connected to the plastic member 20. The first plate body 120 is configured to be separated from the first protruding portion 240 of the plastic member 20 along the pressure relief port 110 after being subjected to the air pressure inside the cell, and to move along the direction away from the electrode assembly after the fracture region 210 is fractured.

As shown in FIG. 1 and FIG. 2, the first plate body 120 and the second plate body 130 are both provided in a circular ring shape. An outer diameter of the first plate body 120 is smaller than an inner diameter of the second plate body 130, so that the first plate body 120 and the second plate body 130 are spaced apart to form the pressure relief port 110 in the circular ring shape. After the cover plate 10 is subjected to the air pressure inside the cell, the first plate body 120 may be separated from the first protruding portion 240 of the plastic member 20 along the extension direction of the pressure relief port 110, thereby achieving initial peeling of the cover plate 10 from the plastic member 20. After the fracture region 210 is fractured due to the continuous action of air pressure, the first plate body 120 will move along the direction away from the electrode assembly, so that the first plate body 120 is detached from the top cover assembly. Since the first plate body 120 is disposed around the outer periphery of the terminal assembly 30, the first plate body 120 is detached from the top cover assembly, which can drive the terminal assembly 30 to be detached, thereby disconnecting the terminal assembly 30 from the current collector 50, and achieving power-off.

Please continue to refer to FIG. 2, in some embodiments, the plastic member 20 includes a main portion 260, a first connecting portion 270, and a second connecting portion 280. The main portion 260 includes a mounting channel 2610. The terminal assembly 30 is disposed in the mounting channel 2610. The first connecting portion 270 is connected to an outer circumferential surface of the main portion 260 at an angle. The second connecting portion 280 is connected to the outer circumferential surface of the main portion 260 at an angle. The fracture region 210 is located in the second connecting portion 280. The first connecting portion 270 is spaced apart from the second connecting portion 280. The first connecting portion 270, the main portion 260, and the second connecting portion 280 are enclosed to form a first snap slot 2810. At least a part of the first plate body 120 is snap-engaged into the first snap slot 2810.

It can be understood that the main portion 260 is formed with the mounting channel 2610 to connect the terminal assembly 30. The first snap slot 2810 enclosed by the first connecting portion 270, the second connecting portion 280, and an outer surface of the main portion 260 may be configured to connect the first plate body 120. After the plastic member 20 and the first plate body 120 are connected by injection molding, so as to ensure that the first plate body 120 is stably and reliably snaped engaged into the first snap slot 2810 without detachment.

In some embodiments, the first connecting portion 270 and the second connecting portion 280 are arranged in parallel with each other. Both the first connecting portion 270 and the second connecting portion 280 are perpendicular to the outer circumferential surface of the main portion 260.

It should be noted that the fracture region 210 is disposed in the second connecting portion 280.

Please continue to refer to FIG. 2, in some embodiments, the plastic member 20 further includes a bending portion 290. The bending portion 290 is connected to an end of the first connecting portion 270 away from the main portion 260. The bending portion 290 extends along a direction away from the second connecting portion 280 and bends toward the terminal assembly 30. The bending portion 290 and the first connecting portion 270 are enclosed to form a second snap slot 2910. An edge of the terminal assembly 30 is provided with a snap portion 310, and the snap portion 310 is snap-engaged into the second snap slot 2910.

It can be understood that since the bending portion 290 and the first connecting portion 270 are formed with the second snap slot 2910 to be snap-engaged with the snap portion 310 at the edge of the terminal assembly 30, thereby achieving the reliable connection between the terminal assembly 30 and the plastic member 20. After the top cover assembly is injection molded, a region of the first plate body 120, the main portion 260, the terminal assembly 30, the first connecting portion 270, and the second connecting portion 280 located in an inner side of the fracture region 210 will form an overall structure. This overall structure can be detached as a whole after being subjected to the internal air pressure.

In some embodiments, the main portion 260, the first connecting portion 270, the second connecting portion 280, and the bending portion 290 are integrally molded.

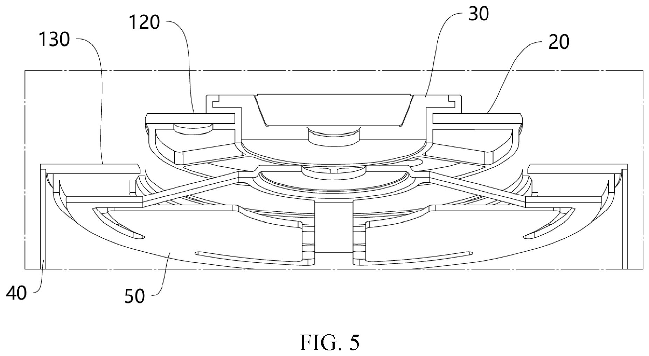

As shown in FIG. 4 and FIG. 5, a top cover structure of the embodiments of the present application has at least two pressure relief methods as follows.

Method 1: in a case where the top cover assembly is subjected to the gas inside the cell, the gas will first act on the terminal assembly 30, so that the terminal assembly 30 moves along the direction away from the electrode assembly. In this case, the first plate body 120 and the plastic member 20 are peeled off first. In a case where the air pressure reaches the opening value of the explosion-proof valve, the fracture region 210 of the plastic member 20 is fractured, and pressure is released from the pressure relief port 110. After the fracture region 210 is completely fractured, the terminal assembly 30, the first plate body 120, and the portion of the plastic member 20 located on the inner side of the fracture region 210 are completely punched out, so that the terminal assembly 30 and the current collector 50 are completely separated, thereby achieving power-off. As such, the safety of the cell is ensured.

Method 2: in the case where the top cover assembly is subjected to the gas inside the cell, the gas will first act on the terminal assembly 30, so that the terminal assembly 30 moves along the direction away from the electrode assembly. In this case, both the first plate body 120 and the second plate body 130 are peeled from the plastic member 20. A part of the gas may be released at a connection between the second plate body 130 and the casing 40. In a case where the air pressure reaches the opening value of the explosion-proof valve, the fracture region 210 of the plastic member 20 is fractured, and pressure is released from the pressure relief port 110. After the fracture region 210 is completely fractured, the terminal assembly 30, the first plate body 120, and the portion of the plastic member 20 located on the inner side of the fracture region 210 are completely punched out, so that the terminal assembly 30 and the current collector 50 are completely separated, thereby achieving power-off. As such, the safety of the cell is ensured.

The top cover assembly in the embodiments of the present application may achieve pressure release by using Method 1.

The embodiments of the present application further provide a single cell. The single cell includes the top cover assembly in the afore-described embodiments.

In the embodiments of the present application, the fracture region 210 is formed on the plastic member 20 and the pressure relief port 110 is formed on the cover plate 10. The fracture region 210 and the pressure relief port 11 0 cooperate with each other to form an explosion-proof valve structure, so that the explosion-proof valve structure can be formed on the top cover assembly without stamping or welding. Furthermore, the plastic member 20 may be formed by injection molding, so that a thickness of the fracture region 210 can be well controlled to facilitate control an opening force of the explosion-proof valve, ensure stability of the opening force of the explosion-proof valve, and improve the safety of the single cell.

The embodiments of the present application further provide a battery pack. The battery pack includes the single cell as described in the afore-described embodiments.

In the embodiments of the present application, the fracture region 210 is formed on the plastic member 20 and the pressure relief port 110 is formed on the cover plate 10. The fracture region 210 and the pressure relief port 110 cooperate with each other to form the explosion-proof valve structure, so that the explosion-proof valve structure can be formed on the top cover assembly without stamping or welding. Furthermore, the plastic member 20 may be formed by injection molding, so that the thickness of the fracture region 210 can be well controlled to facilitate control the opening force of the explosion-proof valve, ensure stability of the opening force of the explosion-proof valve, and improve the safety of the battery pack.

## Claims

1. A top cover assembly applied to a cell, wherein the cell comprises an electrode assembly, and the top cover assembly comprises:
a cover plate (10) provided with a pressure relief port (110); and
a plastic member (20) connected to a side of the cover plate (10) adjacent to the electrode assembly, wherein the plastic member (20) comprises a fracture region (210), the fracture region (210) is provided adjacent to the pressure relief port (110), and the fracture region (210) is configured to be fractured after being subjected to an air pressure inside the cell.

2. The top cover assembly according to claim 1, wherein along a height direction of the cell, a projection of the fracture region (210) at least covers a part of the pressure relief port (110).

3. The top cover assembly according to claim 1 or 2, wherein the plastic member (20) is injection molded to the cover plate (10).

4. The top cover assembly according to any one of claims 1 to 3, wherein along a direction from an edge of the fracture region (210) to a central axis (220) of the fracture region (210), a thickness of at least a part of the fracture region (210) gradually decreases.

5. The top cover assembly according to claim 4, wherein a minimum thickness of the fracture region (210) is D, satisfying: 0.1 mm≦D≦0.8 mm.

6. The top cover assembly according to any one of claims 1 to 5, wherein a side of the plastic member (20) away from the cover plate (10) is formed with a groove (230), and the fracture region (210) is located at a position of the plastic member (20) corresponding to the groove (230).

7. The top cover assembly according to any one of claims 1 to 6, wherein the plastic member (20) is provided with a first protruding portion (240) protruding towards the cover plate (10), and the first protruding portion (240) is snap-engaged into the pressure relief port (110).

8. The top cover assembly according to claim 7, wherein a height of the first protruding portion (240) is H1, and a height of the pressure relief port (110) is H2, satisfying: H1 ≤ H2.

9. The top cover assembly according to any one of claims 1 to 8, wherein the plastic member (20) is provided with a second protruding portion (250) protruding along a direction away from the cover plate (10), and the second protruding portion (250) is configured to abut against the electrode assembly, or to be spaced apart from the electrode assembly.

10. The top cover assembly according to claim 9, wherein the second protruding portion (250) comprises a first protruding section (2510) and a second protruding section (2520) arranged at intervals at two opposite sides of the fracture region (210); and wherein the first protruding section (2510), the fracture region (210), and the second protruding section (2520) are enclosed to form an air chamber (2530), and the air chamber (2530) is configured to accommodate gas generated by the electrode assembly.

11. The top cover assembly according to any one of claims 1 to 10, wherein the cover plate (10) is configured to be deformed along the pressure relief port (110) under the action of the air pressure inside the cell after the fracture region (210) is fractured.

12. The top cover assembly according to claim 11, wherein the pressure relief port (110) is an arc-shaped opening, and a central angle corresponding to the arc-shaped opening is β, satisfying: 180°≦β≦360°.

13. The top cover assembly according to any one of claims 1 to 12, wherein a terminal assembly (30) is connected onto the plastic member (20), and the cover plate (10) is disposed at an outer periphery of the terminal assembly (30); and wherein the pressure relief port (110) extends along a peripheral side of the terminal assembly (30), and the terminal assembly (30) is configured to move along a direction away from the electrode assembly after being subjected to the air pressure inside the cell, and is separated from a current collector (50) of the cell after the fracture region (210) is fractured.

14. The top cover assembly according to claim 13, wherein the plastic member (20) is injection molded to the terminal assembly (30) and the cover plate (10).

15. The top cover assembly according to claim 13 or 14, wherein the cover plate (10) comprises:
a first plate body (120) disposed around the outer periphery of the terminal assembly (30), wherein the first plate body (120) is connected to the plastic member (20); and
a second plate body (130) disposed around the outer periphery of the first plate body (120), wherein the second plate body (130) is spaced apart from the first plate body (120) to form the pressure relief port (110), and the second plate body (130) is connected to the plastic member (20);
wherein the first plate body (120) is configured to be separated from the first protruding portion (240) of the plastic member (20) along the pressure relief port (110) after being subjected to the air pressure inside the cell, and to move along the direction away from the electrode assembly after the fracture region (210) is fractured.

16. The top cover assembly according to claim 15, wherein the plastic member (20) comprises:
a main portion (260) comprising a mounting channel (2610), wherein the terminal assembly (30) is disposed in the mounting channel (2610); and
a first connecting portion (270) connected to an outer circumferential surface of the main portion (260) at an angle; and
a second connecting portion (280) connected to the outer circumferential surface of the main portion (260) at an angle, wherein the fracture region (210) is located in the second connecting portion (280), and the first connecting portion (270) and the second connecting portion (280) are arranged at intervals; and wherein the first connecting portion (270), the main portion (260), and the second connecting portion (280) are enclosed to form a first snap slot (2810), and at least a part of the first plate body (120) is snap-engaged into the first snap slot (2810).

17. The top cover assembly according to claim 16, wherein the plastic member (20) further comprises:
a bending portion (290) connected to an end of the first connecting portion (270) away from the main portion (260), wherein the bending portion (290) extends along a direction away from the second connecting portion (280) and bends toward the terminal assembly (30), and the bending portion (290) and the first connecting portion (270) are enclosed to form a second snap slot (2910); and
wherein an edge of the terminal assembly (30) is provided with a snap portion (310), and the snap portion (310) is clamped into the second snap slot (2910).

18. A single cell, comprising the top cover assembly according to any one of claims 1 to 17.

19. A battery pack, comprising the single cell according to claim 18.
